# EUROPÄISCHE PATENTSCHRIFT

(11) **EP 3 067 989 B1**
(45) Veröffentlichungstag und Bekanntmachung des Hinweises auf die Patenterteilung: **01.08.2018**
(21) Anmeldenummer: 16150179.6
(22) Anmeldetag: 05.01.2016
(51) Int. Cl.: H01R 12/00

(54) **INSTALLATIONSGERÄT FÜR EIN GEBÄUDETECHNISCHES ELEKTRISCHES INSTALLATIONSSYSTEM SOWIE VERFAHREN ZUM ERKENNEN EINES AN EIN PRIMÄRMODUL EINER SOLCHEN INSTALLATION ANGESCHLOSSENES SEKUNDÄRMODUL**
INSTALLATION DEVICE FOR A BUILDING TECHNOLOGY ELECTRICAL INSTALLATION SYSTEM AND METHOD FOR DETECTING A SECONDARY MODULE CONNECTED TO A PRIMARY MODULE OF SUCH AN INSTALLATION
APPAREIL D'INSTALLATION POUR UN SYSTEME D'INSTALLATION ELECTRIQUE DE BATIMENT ET PROCEDE DE RECONNAISSANCE D'UN MODULE SECONDAIRE RACCORDE A UN MODULE PRIMAIRE D'UNE TELLE INSTALLATION

(30) Priorität: 10.03.2015 DE 102015103454
(43) Veröffentlichungstag der Anmeldung: 14.09.2016
(73) Patentinhaber: Albrecht Jung GmbH & Co. KG, 58579 Schalksmühle (DE)
(72) Erfinder: Gebhardt, Marc, 58579 Schalksmühle (DE); Wiesing, Dietmar, 58553 Halver (DE); Bonventre, Giancarlo, 58509 Lüdenscheid (DE); Hartmann, Torsten, 58509 Lüdenscheid (DE)

(56) Entgegenhaltungen:
- WO-A1-2014/000695
- JP-A- H11 332 875
- US-A- 5 536 981
- US-A1- 2014 233 554

## Beschreibung

Die Erfindung betrifft ein Installationsgerät für ein gebäudetechnisches elektrisches Installationssystem mit einem einen Controller aufweisenden Primärmodul und mit einem Sekundärmodul, das an eine Hardwareschnittstelle des Primärmoduls angeschlossen ist. Ferner betrifft die Erfindung ein Verfahren zum Erkennen eines an eine Hardwareschnittstelle eines einen Controller aufweisenden Primärmoduls einer gebäudetechnischen elektrischen Installation angeschlossenen Sekundärmoduls.

Im Zusammenhang mit gebäudetechnischen elektrischen Installationssystemen werden Installationsgeräte eingesetzt, die in Abhängigkeit von der zu realisierenden Ausführung unterschiedlich bestückt sein können. Bei einem solchen gebäudetechnischen elektrischen Installationssystem kann es sich beispielsweise um ein Kommunikationssystem, etwa eine Türkommunikation handeln. Derartige Installationsgeräte werden auch im Zusammenhang mit anderen gebäudetechnischen elektrischen Installationen eingesetzt, beispielsweise der Lichtansteuerung, der Heizungsansteuerung oder dergleichen. Bei derartigen Installationsgeräten handelt es sich typischerweise um Unterputzgeräte, also solche, die in einer Installationsdose unter Putz verbaut werden. In Abhängigkeit von den gewünschten Anforderungen, die das Installationsgerät erfüllen soll, ist dieses entsprechend ausgerüstet. Zum vereinfachten Darstellen von Installationsgeräten mit unterschiedlichen Ausbaustufen und/oder unterschiedlichen Anwendungen sind diese zum Teil modulartig konzipiert. Verfolgt wird durch dieses Konzept, die ohnehin benötigten Komponenten eines solchen Installationsgerätes in einem Primärmodul zusammenzufassen, welches dann in Abhängigkeit von der gewünschten Ausführung und Anforderung an das Installationsgerätes um ein oder mehrere weitere Module ergänzt wird. Handelt es sich beispielsweise bei dem Installationsgerät um ein solches, welches im Zusammenhang mit einer Türkommunikation benötigt wird, kann es sich bei dem mit dem Primärmodul zu verheiratenden Sekundärmodul um unterschiedliche Ausgestaltungen eines Displays handeln. Ein solches Display kann für die Bedienung der Türkommunikation und/oder auch als Bildschirm im Rahmen einer Videoüberwachung dienen. Je nach gewünschtem Anforderungsprofil und/oder je nach der gewünschten Designauslegung ist ein solches als Display konzipiertes Sekundärmodul unterschiedlich ausgelegt und somit auch mit einem unterschiedlichen Controller ausgestattet. Daher werden je nach Auslegung des Displays zum Betreiben desselben unterschiedliche Konfigurationsdaten benötigt.

Damit das Installationsgerät mit seinem Primärmodul und dem daran angeschlossenen Sekundärmodul bestimmungsgemäß arbeiten kann, müssen die beiden Module - Primärmodul und Sekundärmodul - miteinander verheiratet werden. Dies bedeutet, dass dem Primärmodul, welches über einen Controller verfügt, bekannt ist, welches Sekundärmodul an seine Hardwareschnittstelle angeschlossen ist. Ein solches Verheiraten von Modulen soll selbsttätig erfolgen, das heißt: ohne das im Zuge einer Einrichtungsroutine dem Primärmodul benutzerseitig angegeben wird, was für ein Sekundärmodul daran angeschlossen ist. Aus DE 10 2010 017 102 B4 ist ein Installationsgerät bekannt, bei dem ein automatisches Verheiraten eines darin als Einsatzgerät angesprochenen Primärmoduls mit einem in diesem Dokument als Aufsatzgerät angesprochenen Sekundärmodul erfolgt. Hierfür ist es allerdings erforderlich, dass beide Module über Prozessormittel verfügen, damit für die vorgesehene Verheiratung der Module eine Kommunikation zwischen den Prozessormitteln der beiden Module stattfinden kann.

Die US 2014/0233554 A1 zeigt ein Verwaltungssystem für einen Netzwerk, bei dem mehrere Verwaltungsstationen für drahtlose Feldgeräte, die sowohl die Funktion eines Gateways, als auch System-Verwaltungsfunktionen haben, in redundanter Weise miteinander verbunden sind. Die Verbindung wird hierbei über ein Synchronisierungskabel realisiert, das auch eine Überprüfung der korrekten Verbindung der Verwaltungsstation mit dem Kabel ermöglicht. Hierzu ist auf Seiten der Verwaltungsstation eine Identifizierungseinheit vorgesehen, die über Kabel mit zwei Identifizierungspins verbunden ist. Auf Seiten des Kabels sind komplementäre Pins vorgesehen, die derart miteinander verbunden sind, dass bei korrektem Anschluss ein Kurzschluss der Identifizierungspins erfolgt, der von der Identifizierungseinheit festgestellt wird. Die Anordnung der Identifizierungspins ist je nach Verwaltungsstation individuell.

Die JP H11-332875 A offenbart ein Ultraschall-Behandlungsgerät für chirurgische Zwecke, bei dem ein Handgerät über ein Kabel und einen Stecker an eine Buchse eines Basisteils angeschlossen wird. Hierbei ist vorgesehen, dass die isolierenden Teile des Steckers und der Buchse zueinander komplementäre vorspringende und zurückreichende Abschnitte aufweisen. Es ist auch möglich, unterschiedliche Handgeräte zu identifizieren.

Vor dem Hintergrund dieses Standes der Technik wäre es aus Gründen einer möglichen Vereinfachung des Installationsgerätes und einer vereinfachten Verheiratungsroutine wünschenswert, wenn ein Verheiraten des Primärmoduls mit dem Sekundärmodul, auch ohne dass das Sekundärmodul Prozessormittel aufweisen müsste und auf diese Weise ein Verheiraten möglich wäre, ohne das unter Umständen in dem Sekundärmodul vorhandene Prozessormittel aktiv für diesen Prozess genutzt werden.

Der Erfindung liegt daher die Aufgabe zugrunde, ein Installationsgerät für ein gebäudetechnisches elektrisches Installationssystem sowie ein Verfahren zum Erkennen eines an ein Primärmodul einer gebäudetechnischen elektrischen Installation angeschlossenen Sekundärmoduls vorzuschlagen, mit dem dem vorstehenden Wunsch Rechnung getragen wird.

Die installationsgerätbezogene Aufgabe wird erfindungsgemäß durch ein eingangs genanntes, gattungsgemäßes Installationsgerät gelöst, bei dem das Primärmodul mit einer Sekundärmodulerkennung ausgerüstet ist, um aus mehreren möglichen, an die Schnittstelle anschließbaren Sekundärmodulen das aktuell angeschlossene Sekundärmodul zu erkennen, wobei zumindest ein an die Schnittstelle anschließbares Sekundärmodul über zumindest eine die Schnittstelle des Primärmoduls kontaktierende, passive Codierungskontaktschleife verfügt und die Codierung des Sekundärmoduls über die von der Kontaktschleife benutzten Anschlusskontakte des Primärmoduls eingerichtet ist, indem sich unterschiedliche Sekundärmodule mit Kontaktschleife durch eine unterschiedliche Belegung der hierfür dienenden Anschlusskontakte unterscheiden.

Die verfahrensbezogene Aufgabe ist durch ein eingangs genanntes, gattungsgemäßes Verfahren gelöst, bei dem das von dem Primärmodul wenigstens ein Anschlusskontakt seiner Schnittstelle mit einer Prüfspannung beaufschlagt wird und ein oder mehrere weitere Anschlusskontakte daraufhin auf einen Spannungseingang hin überwacht werden, wobei durch jedes an das Primärmodul zum Anschließen vorgesehene Sekundärmodul der Prüfspannungsausgang zum passiven Zurückschleifen wenigstens eines Teils der Prüfspannung an die Schnittstelle des Primärmoduls wenigstens ein unterschiedlicher Anschlusskontakt beaufschlagt wird und wobei nach Feststellen eines Spannungseingangs an dem oder den für ein bestimmtes Sekundärmodul charakteristischen Anschlusskontakten der Controller eine vordefinierte Routine ausführt.

Bei dem erfindungsgemäßen Installationsgerät verfügt ein an das Primärmodul zum Anschließen vorgesehene Sekundärmodul jeweils über eine Codierungskontaktschleife. Diese Kontaktschleife kontaktiert zumindest zwei Anschlusskontakte der Hardwareschnittstelle des Primärmoduls. Die Kontaktschleife selbst ist passiv, das heißt: eine durch das Primärmodul über einen ersten Anschlusskontakt in die Kontaktschleife eingekoppelte Prüfspannung wird an einen oder mehrere weitere Anschlusskontakte der Schnittstelle des Primärmoduls zurückgeführt, und zwar ohne dass unter Umständen in dem Sekundärmodul vorhandene aktive Komponenten, wie etwa Prozessormittel (Controller) aktiv daran beteiligt sind. Mithin müssen unter Umständen im Sekundärmodul vorhandene aktive Bauelemente für das Zurückschleifen der Prüfspannung nicht in Betrieb sein. In Abhängigkeit davon, an welchem weiteren Anschlusskontakt der Schnittstelle des Primärmoduls, an dass das Sekundärmodul angeschlossen ist, die Prüfspannung oder ein Teil derselben erfassbar ist, ist die Identität des Sekundärmoduls erkennbar. Unterschiedliche Sekundärmodule schleifen die Prüfspannung an zumindest einen unterschiedlichen Anschlusskontakt der Schnittstelle zurück. Durchaus besteht auch die Möglichkeit, bei unterschiedlichen Sekundärmodulen unterschiedliche Anschlusskontakte für das Einkoppeln der Prüfspannung vorzusehen. Ist seitens des Primärmoduls erkannt, welches Sekundärmodul an seine diesbezügliche Hardwareschnittstelle angeschlossen ist, führt dessen Controller eine vordefinierte Routine aus. Typischerweise handelt es sich hierbei um eine Routine, gemäß der die für einen Betrieb des Sekundärmoduls benötigten Konfigurationsdaten an dieses übertragen werden. Bei dieser Routine kann es sich auch um eine Routine handeln, gemäß der das Primärmodul die Identität des erkannten Sekundärmoduls über einen gebäudetechnischen Installationsbus an eine zentrale Steuereinheit meldet. Dies setzt allerdings voraus, dass das Primärmodul an einen solchen Installationsbus angeschlossen ist, was in aller Regel der Fall sein dürfte.

Handelt es sich bei dem Sekundärmodul um ein solches, welches keine Konfigurierung benötigt, besteht die vordefinierte Routine des Primärmoduls typischerweise allein darin, die Identität des angeschlossenen Sekundärmoduls zu speichern.

Mit dem vorbeschriebenen Konzept ist es somit mit besonders einfachen Mitteln möglich, dass von einem Primärmodul ein daran angeschlossenes Sekundärmodul erkannt und mit diesem verheiratet wird. Dieses ist auch mit solchen Sekundärmodulen möglich, die selbst keine aktiven Elemente tragen.

Sind an das Sekundärmodul Konfigurationsdaten zu übertragen, werden diese gemäß einer Ausgestaltung einem Konfigurationsdatenspeicher des Primärmoduls entnommen. In diesem sind die Konfigurationsdaten derjenigen Sekundärmodule abgelegt, die an das Primärmodul angeschlossen werden können. Durchaus möglich ist auch eine Ausgestaltung, bei der in einem solchen Konfigurationsdatenspeicher die Konfigurationsdaten nur von wenigen Sekundärmodulen abgelegt sind, typischerweise, wenn es sich hierbei um gleichartige Sekundärmodule handelt, wie etwa unterschiedlich große Displays. Dieses schließt nicht aus, dass auch andere Sekundärmodule an die Hardwareschnittstelle des Primärmoduls angeschlossen werden können. in einem solchen Fall werden die Konfigurationsdaten nicht dem primärmodulseitigen Konfigurationsdatenspeicher entnommen, sondern von dem Primärmodul aus dem Installationssystem abgerufen.

Die Codierungskontaktschleife kann gemäß einer möglichen Ausgestaltung der Erfindung als elektrischer Leiter ausgeführt sein, der den den prüfspannungsbeaufschlagten Anschlusskontakt der Schnittstelle des Primärmoduls kontaktierenden Leiter mit demjenigen Leiter, der an den Anschlusskontakt der Schnittstelle angeschlossen ist, über den die zurückgeführte Prüfspannung als Identität für dieses Sekundärmodul zurückgeschliffen wird, ausgeführt sein. Gemäß einer anderen Ausgestaltung wird ein zurückschleifender Kontakt genutzt, über den beim Einkoppeln einer Prüfspannung in die sekundärmodulseitige Kontaktschleife ohnehin zurückgeführt wird.

Zur Unterscheidung von lediglich zwei Sekundärmodulen voneinander kann grundsätzlich vorgesehen sein, dass tatsächlich nur eines der beiden Sekundärmodule eine solche Codierungskontaktschleife aufweist, während das andere Sekundärmodul eine solche Kontaktschleife nicht aufweist. Dann ist eine eindeutige Erkennung, welches Sekundärmodul an das Primärmodul angeschlossen ist, auch auf diese Weise möglich. Bei einer solchen Ausgestaltung ist jedoch zu berücksichtigen, dass immer dann, wenn nach Einkoppeln einer Prüfspannung in das Sekundärmodul keine Prüfspannung dem oder den hierfür definierten Anschlusskontakten der Schnittstelle durch Zurückschleifen der Prüfspannung oder eines Teils davon erfasst wird, darauf geschlossen wird, dass es sich bei dem angeschlossenen Sekundärmodul um dasjenige der zwei Möglichen handelt, welches keine Kontaktschleife aufweist. Es kann nicht unterschieden werden, ob es sich bei diesem Sekundärmodul tatsächlich um das für diese Zwecke vorgesehene oder um ein anderes, nicht zu der Gruppe der zum Anschließen vorgesehenen Sekundärmodule Gehörendes handelt. Aus diesem Grunde wird man in aller Regel nur solche Sekundärmodule verwenden, die sich eindeutig seitens des Primärmoduls identifizieren lassen.

Die Codierungskontaktschleife kann sich bei dem Primärmodul beispielsweise in seiner Anschlussfahne befinden, mit der dieses an die Hardwareschnittstelle des Primärmoduls angeschlossen ist. Gleiches gilt für den Fall, dass die Hardwareschnittstelle des Primärmoduls mittels eines Steckers des Sekundärmoduls kontaktiert wird. Die Kontaktschleife kann auch durch die ohnehin vorhandene Leiterbahnstruktur auf einer solchen Kontaktfahne unter Einbeziehung der übrigen Leiterbahnstruktur des Sekundärmoduls ausgeführt sein.

Das vorbeschriebene Konzept kann dahingehend erweitert werden, dass das an ein Primärmodul angeschlossene Sekundärmodul selbst die Funktionalität eines Primärmoduls aufweist, damit an dieses wiederum ein weiteres Modul mit der Funktionalität eines Sekundärmoduls angeschlossen und mit diesem verheiratet werden kann. Somit kann sich das beschriebene Konzept auch über mehrere Ebenen hinweg erstrecken. Erstreckt sich der Aufbau eines solchen Installationsgerätes über mehrere Module hinweg, kann die Steuerung der Erkennung und Verheiratung durch das jeweilige Primärmodul in Bezug auf das daran angeschlossene Sekundärmodul, wie vorbeschrieben, vorgenommen werden. Auch besteht die Möglichkeit, dass das Basis-Primärmodul für die Erkennung und Verheiratung nicht nur des ersten Sekundärmoduls sondern auch der weiteren Sekundärmodule verantwortlich ist.

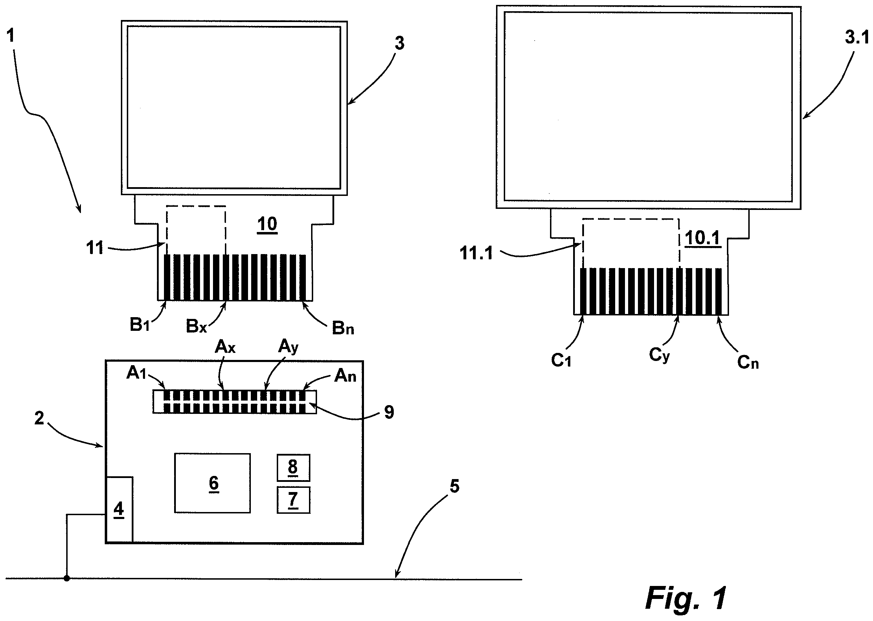

Nachfolgend ist die Erfindung anhand eines Ausführungsbeispiels unter Bezugnahme auf die beigefügte **Figur 1** beschrieben. Figur 1 zeigt nach Art eines Blockschaltbildes ein Installationsgerät 1. Das Installationsgerät 1 umfasst bei dem dargestellten Ausführungsbeispiel ein Primärmodul 2 und ein Sekundärmodul 3 oder 3.1. Das Primärmodul 2 ist als Unterputzeinsatz ausgeführt und verfügt über eine Schnittstelle 4, mit der das Primärmodul 2 an einen gebäudetechnischen Installationsbus 5 angeschlossen ist. Das Installationsgerät 1 ist Bestandteil einer Türkommunikation als gebäudetechnisches elektrisches Installationssystem. Das Primärmodul 2 verfügt über eine nicht dargestellte Stromversorgung, weitere Komponenten, die im Rahmen der Beschreibung der Erfindung nicht von Relevanz sind sowie über einen Mikrocontroller 6. Angeschlossen an den Mikrocontroller sind ein Konfigurationsdatenspeicher 7 sowie ein Speicher 8, in dem die Identität des an das Primärmodul 2 angeschlossen Sekundärmoduls 3 oder 3.1 abgelegt ist. Das Primärmodul 2 verfügt des Weiteren über eine Hardwareschnittstelle 9, über die das jeweils gewünschte Sekundärmodul 3 oder 3.1 an das Primärmodul 2 angeschlossen werden. Die Schnittstelle 9 verfügt über eine Vielzahl von Anschlusskontakten A₁...Aₙ.

Bei den Sekundärmodulen 3, 3.1 handelt es sich jeweils um ein Display. Die Displays unterscheiden sich hinsichtlich ihrer Größe voneinander. Somit umfassen die beiden unterschiedlichen Sekundärmodule 3, 3.1 auch unterschiedliche Controller und benötigen für ihren Betrieb unterschiedliche Konfigurationsdaten.

Im Folgenden ist zunächst das Primärmodul 3 näher beschrieben. Das Primärmodul 3 verfügt über eine Anschlussfahne 10, die als flexible Leiterbahn ausgeführt ist. Die Anschlussfahne 10 trägt an ihrem anschlussseitigen Ende Anschlusskontakte B₁...Bₙ. In der Anschlussfahne 10 sind der Übersicht halber nur die Anschlusskontakte B₁...Bₙ gezeigt, nicht jedoch die diese weiterführenden elektrischen Leiter.

Die Anschlusskontakte B₁...Bₙ sind hinsichtlich ihrer Größe und Beabstandung voneinander ausgelegt, um Anschlusskontakte A₁...Aₙ der Schnittstelle 9 des Primärmoduls 2 zu kontaktieren. Es versteht sich, dass die Zahl der Anschlusskontakte A₁...Aₙ der Schnittstelle 9 des Primärmoduls 2 durchaus größer sein kann als die Anzahl der Anschlusskontakte B₁...Bₙ des Sekundärmoduls. Auch brauchen nicht sämtliche Anschlusskontakte A₁...Aₙ der Schnittstelle 9 beziehungsweise B₁...Bₙ der Anschlussfahne 10 tatsächlich belegt sein.

Das Primärmodul 2 verfügt über eine Sekundärmodulerkennung, mit der nach Anschließen des jeweiligen Sekundärmoduls 3 oder 3.1 an die Schnittstelle 9 des Primärmoduls 2 dessen Identität festgestellt werden kann. Soll das Sekundärmodul 3 an das Primärmodul 2 angeschlossen werden, wird die Anschlussfahne 10 mit ihren Anschlusskontakten B₁...Bₙ an die Anschlusskontakte A₁...Aₙ der Schnittstelle 9 des Primärmoduls angeschlossen. Das Sekundärmodul 3 verfügt über eine passiv ausgelegte Codierungskontaktschleife 11, die in der Figur innerhalb der Anschlussfahne 10 gestrichelt dargestellt ist. Nach Anschließen der Kontaktfahne 10 des Sekundärmoduls 3 an das Primärmodul 2 wird über einen vorgegebenen Anschlusskontakt der Schnittstelle 9 eine Prüfspannung an das angeschlossene Sekundärmodul 3 eingekoppelt. Bei dem dargestellten Ausführungsbeispiel ist hierfür der Anschlusskontakt A₁ der Schnittstelle 9 des Primärmoduls 2 vorgesehen. Angeschlossen an den Anschlusskontakt A₁ des Primärmoduls 2 ist der Anschlusskontakt B₁ des Sekundärmoduls 3. Somit bildet bei dem dargestellten Ausführungsbeispiel der Anschlusskontakt B₁ den Eingangskontakt der Kontaktschleife 11. Aufgrund der Auslegung der Kontaktschleife 11 wird die über den Anschlusskontakt B₁ eingekoppelte Prüfspannung an den Anschlusskontakt Bₓ zurückgeschliffen. Dieser Anschlusskontakt Bₓ kontaktiert den Anschlusskontakt Aₓ der Schnittstelle 9 des Primärmoduls 2. Über den Anschlusskontakt Aₓ empfangene, zurückgeschliffene Prüfspannung dient als Codierung dafür, dass an die Schnittstelle 9 des Primärmoduls 2 das Sekundärmodul 3 und nicht das Sekundärmodul 3.1 angeschlossen worden ist. Bei dem dargestellten Ausführungsbeispiel kommt es nicht auf die Höhe der zurückgeschliffenen Prüfspannung an, sondern nur darauf, dass infolge des Einkoppelns der Prüfspannung an dem Anschlusskontakt Aₓ eine Spannung erfassbar beziehungsweise messbar ist. Durchaus besteht für die Codierung auch die Möglichkeit, dass die zurückgeschliffene Prüfspannung einen gewissen Wert aufweisen muss, um als solche erkannt zu werden. Die Überwachung des oder der für die mögliche Zurückschleifung einer eingekoppelten Prüfspannung vorgesehenen Anschlusskontakte der Schnittstelle 9 übernimmt der Mikrocontroller 6 des Primärmoduls 2. Bei dem dargestellten Ausführungsbeispiel sind die Anschlusskontakte Aₓ und A_{y} die möglichen, auf den eine in das jeweilige Sekundärmodul 3 beziehungsweise 3.1 eingekoppelte Prüfspannung zurückgeschliffen werden kann. Wird die Prüfspannung in den Anschlusskontakt Aₓ zurückgeschliffen, bedeutet dieses, dass das Sekundärmodul 3 und nicht das Sekundärmodul 3.1 an die Schnittstelle 9 angeschlossen worden ist. Ist die Identität des angeschlossenen Sekundärmoduls - hier des Sekundärmoduls 3 - erkannt, wird dessen Identität in dem Speicher 8 des Primärmoduls 2 abgelegt. Dieses erfolgt im Rahmen einer vordefinierten Routine, die seitens des Primärmoduls 2 durchlaufen wird, wenn ein an die Schnittstelle 9 angeschlossenes Sekundärmodul 3 oder 3.1 erkannt worden ist.

Da es sich bei dem Sekundärmodul 3 um ein Display handelt, werden zum Betrieb desselben Konfigurationsdaten benötigt, die in dem Konfigurationsdatenspeicher 7 des Primärmoduls 2 bei dem dargestellten Ausführungsbeispiel abgelegt sind. Nach Feststellen der Identität des Sekundärmoduls werden in einem nachfolgenden Schritt die für dieses Sekundärmodul benötigten Konfigurationsdaten über die Schnittstelle 9 an das Sekundärmodul 3 übertragen. Diese Konfigurationsdaten umfassen die notwendigen Daten der zum Betreiben des als Display ausgelegten Sekundärmoduls 3, die diesbezüglichen im Sekundärmodul 3 enthaltenen Schnittstellen nebst Default-Einstellungen in Bezug auf Helligkeit, Farbsättigung, Kontrast, Skalierung der Bildgröße und dergleichen.

Im Rahmen der Türkommunikation handelt es sich bei dem Installationsgerät 1 um ein Videowiedergabegerät, auf dessen Display - dem Sekundärmodul 3 - angezeigt wird, was von einer Türkamera (nicht dargestellt) aufgenommen worden ist. Die Türkamera selbst übermittelt ihre Daten über den Installationsbus 5 an das daran angeschlossene Primärmodul 2.

Das Sekundärmodul 3.1 ist genauso aufgebaut wie das Sekundärmodul 3. Daher sind gleiche Bauteile mit denselben Bezugszeichen, ergänzt um ein ".1" verwendet. Wird anstelle des Sekundärmoduls 3 das Sekundärmodul 3.1 an das Primärmodul 2 angeschlossen, wird im Rahmen der Sekundärmodulerkennung festgestellt, dass die über den Prüfspannungseingangskontakt C₁ der Anschlussfahne 10.1 des Sekundärmoduls 3.1 zu einem anderen Anschlusskontakt C_{y} zurückgeschliffen wird, da die Kontaktschleife 11.1 entsprechend ausgelegt ist. Folglich wird der Anschlusskontakt A_{y} der Schnittstelle 9 des Primärmoduls 2 die zurückgeschliffene Prüfspannung erhalten, so dass in einem solchen Fall festgestellt werden wird, dass an das Primärmodul 2 das Sekundärmodul 3.1 angeschlossen worden ist. Die Routineübertragung von Konfigurationsdaten vollzieht sich ebenso, wie dieses zu dem Anschluss des Sekundärmoduls 3 an das Primärmodul 2 bereits beschrieben ist.

Aus der Beschreibung der Erfindung wird deutlich, dass eine Verheiratung zwischen einem Primärmodul und einem Sekundärmodul auf besonders einfache Weise möglich ist. Im Rahmen der geltenden Ansprüche gibt es zahlreiche weitere Ausgestaltungen, die Erfindung durchführen zu können.

### Bezugszeichenliste

- 1: Installationsgerät
- 2: Primärmodul
- 3,3.1: Sekundärmodul
- 4: Schnittstelle
- 5: gebäudetechnischer Installationsbus
- 6: Mikrocontroller
- 7: Konfigurationsdatenspeicher
- 8: Speicher
- 9: Hardwareschnittstelle
- 10, 10.1: Anschlussfahne
- 11, 11.1: Kontaktschleife
- A₁...Aₙ: Anschlusskontakt
- B₁...Bₙ: Anschlusskontakt
- C₁...Cₙ: Anschlusskontakt

## Patentansprüche

1. Installationsgerät für ein gebäudetechnisches elektrisches Installationssystem mit einem einen Controller (6) aufweisenden Primärmodul (2) und mit einem Sekundärmodul (3, 3.1), das an eine Hardwareschnittstelle (9) des Primärmoduls (2) angeschlossen ist, **dadurch gekennzeichnet, dass** das Primärmodul (2) mit einer Sekundärmodulerkennung ausgerüstet ist, um aus mehreren möglichen, an die Schnittstelle (9) anschließbaren Sekundärmodulen (3, 3.1) das aktuell angeschlossene Sekundärmodul (3 oder 3.1) zu erkennen, wobei zumindest ein an die Schnittstelle (9) anschließbares Sekundärmodul (3, 3.1) über zumindest eine die Schnittstelle (9) des Primärmoduls (2) kontaktierende, passive Codierungskontaktschleife (11, 11.1) verfügt und die Codierung des Sekundärmoduls (3, 3.1) über die von der Kontaktschleife (11, 11.1) benutzten Anschlusskontakte (A₁, Aₓ; A₁, A_{y}) des Primärmoduls (2) eingerichtet ist, indem sich unterschiedliche Sekundärmodule (3, 3.1) mit Kontaktschleife (11, 11.1) durch eine unterschiedliche Belegung der hierfür dienenden Anschlusskontakte (A₁, Aₓ; A₁, A_{y}) des Primärmoduls (2) unterscheiden.

2. Installationsgerät nach Anspruch 1, **dadurch gekennzeichnet, dass** in dem Primärmodul (2) zum Betreiben der daran zum Anschließen vorgesehenen Sekundärmodule (3, 3.1) erforderliche Konfigurationsdaten gespeichert oder über das Primärmodul (2) von einem externen Speicher abrufbar sind.

3. Installationsgerät nach Anspruch 1 oder 2, **dadurch gekennzeichnet, dass** die Schnittstelle (9) des Primärmoduls (2) zum Sekundärmodul (3, 3.1) über einen Anschlusskontakt (A₁) als Prüfspannung beaufschlagbaren Ausgangskontakt und wenigstens einen für jedes zum Anschließen vorgesehene Sekundärmodul (3, 3.1) charakteristischen Anschlusskontakt (Aₓ, A_{y}) als Empfangskontakt verfügt.

4. Installationsgerät nach einem der Ansprüche 1 bis 3, **dadurch gekennzeichnet, dass** das Sekundärmodul seinerseits die Funktionalität eines Primärmoduls aufweist und mit einer Hardwareschnittstelle ausgerüstet ist, um daran ein weiteres Modul mit der Funktionalität eines Sekundärmoduls anschließen zu können.

5. Installationsgerät nach Anspruch 4, **dadurch gekennzeichnet, dass** der Controller des Primärmoduls, an das die Funktionalitäten eines weiteren Primärmoduls aufweisende Sekundärmodul angeschlossen ist, auch für die Erkennung des weiteren, an das Sekundärmodul angeschlossenen Moduls zuständig ist.

6. Installationsgerät nach Anspruch 4, **dadurch gekennzeichnet, dass** das die Funktionalitäten eines weiteren Primärmoduls aufweisende Sekundärmodul mit einem eigenen Controller ausgestattet ist.

7. Installationsgerät nach einem der Ansprüche 1 bis 6, **dadurch gekennzeichnet, dass** das Primärmodul (2) eine weitere Schnittstelle (4) aufweist, über die das Primärmodul (2) an einen gebäudetechnischen Installationsbus (5) anschließbar ist.

8. Installationsgerät nach einem der Ansprüche 1 bis 7, **dadurch gekennzeichnet, dass** das Primärmodul (2) als Unterputzeinsatz eines Türkommunikationssystems und die daran anschließbaren Sekundärmodule (3, 3.1) unterschiedlich ausgelegte Displays sind.

9. Verfahren zum Erkennen eines an eine Hardwareschnittstelle (9) eines einen Controller (2) aufweisenden Primärmoduls (2) einer gebäudetechnischen elektrischen Installation angeschlossenen Sekundärmoduls (3, 3.1), **dadurch gekennzeichnet, dass** von dem Primärmodul (2) wenigstens ein Anschlusskontakt (A₁) seiner Schnittstelle (9) mit einer Prüfspannung beaufschlagt wird und ein oder mehrere weitere Anschlusskontakte (Aₓ, A_{y}) daraufhin auf einen Spannungseingang hin überwacht werden, wobei durch jedes an das Primärmodul (2) zum Anschließen vorgesehene Sekundärmodul (3, 3.1) der Prüfspannungsausgang zum passiven Zurückschleifen wenigstens eines Teils der Prüfspannung an die Schnittstelle (9) des Primärmoduls (2) wenigstens ein unterschiedlicher Anschlusskontakt (Aₓ, A_{y}) beaufschlagt wird und wobei nach Feststellen eines Spannungseingangs an dem oder den für ein bestimmtes Sekundärmodul (3, 3.1) charakteristischen Anschlusskontakten (Aₓ, A_{y}) der Controller (6) eine vordefinierte Routine ausführt.

10. Verfahren nach Anspruch 9, **dadurch gekennzeichnet, dass** im Rahmen der vordefinierten Routine die Identität des erkannten Sekundärmoduls (3, 3.1) in einem Speicher (8) abgelegt wird.

11. Verfahren nach Anspruch 9 oder 10, **dadurch gekennzeichnet, dass** im Rahmen der vordefinierten Routine das Sekundärmodul (3, 3.1) in Abhängigkeit von seiner Identität von dem oder über das Primärmodul (2) konfiguriert wird.

12. Verfahren nach Anspruch 11, **dadurch gekennzeichnet, dass** zur Konfigurierung des an das Primärmodul (2) angeschlossenen Sekundärmoduls (3, 3.1) durch den Controller (6) des Primärmoduls (2) auf in einem Konfigurationsdatenspeicher (7) desselben abgelegte Konfigurationsdaten zurückgegriffen wird.

13. Verfahren nach Anspruch 11, **dadurch gekennzeichnet,** das zur Konfigurierung des angeschlossenen Sekundärmoduls durch den Controller über einen gebäudetechnischen Installationsbus auf in einem externen Konfigurationsspeicher abgelegte Konfigurationsdaten zurückgegriffen wird oder das Primärmodul diese Konfigurationsdaten über den Installationsbus erhält, sobald seitens des Primärmoduls ein Signal abgesetzt worden ist, dass das daran angeschlossene Sekundärmodul erkannt worden ist, welches Signal eine Identifikation des erkannten Sekundärmoduls beinhaltet.

## Claims

1. Installation device for an electrical building installation system with a primary module (2) with controller (6) and with a secondary module (3, 3.1), which is connected to a hardware interface (9) of the primary module (2), **characterized by the fact** that the primary module (2) is equipped with a secondary module detection in order to detect the currently connected secondary module (3 or 3.1) out of several secondary modules (3, 3.1) which might possibly be connected to the interface (9), wherein at least one secondary module (3; 3.1) to be connected to the interface (9) provides at least one passive coding contact loop (11, 11.1) contacting the interface (9) of the primary module (2) and the coding of the secondary module (3, 3.1) is arranged via the connection contacts (A₁, Aₓ; A₁, A_{y}) of the primary module (2) used by the contact loop (11, 11.1), in a way that different secondary modules (3, 3.1) with contact loop (11, 11.1) differ in a different assignment of the relevant connection contacts (A₁, Aₓ; A₁, A_{y}) of the primary module (2).

2. Installation device in accordance with Claim 1, **characterized by the fact** that in the primary module (2) configuration data necessary for operation of the secondary modules (3, 3.1) provided for connection to the primary module are stored or can be called up from an external memory via the primary module (2).

3. Installation device in accordance with Claim 1 or 2, **characterized by the fact** that the interface (9) of the primary module (2) to the secondary module (3, 3.1) provides a connection contact (A₁) as output contact charged with test voltage and at least one characteristic connection contact (Aₓ, A_{y}) as reception contact for each secondary module (3, 3.1) destined for connection.

4. Installation device in accordance with any of Claims 1 to 3, **characterized by the fact** that the secondary module for its part provides the functionality of a primary module and is equipped with a hardware interface to provide the possibility to connect a further module with the functionality of a secondary module.

5. Installation device in accordance with Claim 4, **characterized by the fact** that the controller of the primary module is connected to the secondary module providing the functionalities of a further primary module and is also responsible for the detection of a further module connected to the secondary module.

6. Installation device in accordance with Claim 4, **characterized by the fact** that the secondary module providing the functionalities of a further primary module is equipped with an own controller.

7. Installation device in accordance with any of Claims 1 to 6, **characterized by the fact** that the primary module (2) provides a further interface (4), via which the primary module (2) can be connected to an installation bus (5) in building technology.

8. Installation device in accordance with any of Claims 1 to 7, **characterized by the fact** that the primary module (2) as flush-mounted insert of a door communication system and the secondary modules to be connected to the latter (3, 3.1) are differently designed displays.

9. Process for detection of a secondary module (3, 3.1) connected to a hardware interface (9) of a primary module of a building technology installation (2) providing a controller (2) **characterized by the fact** that the primary module (2) charges at least one connection contact (A₁) of its interface (9) with test voltage, and hereopon one or several connection contacts (Aₓ, A_{y}) are monitored with regard to a voltage input, wherein by the test voltage output of each secondary module (3, 3.1) destined for connection to the primary module (2) at least one different connection contact (Aₓ, A_{y}) is used for passive back-looping of at least one part of the test voltage to the interface (9), and wherein after detection of a voltage input at the connection contact(s) (Aₓ, A_{y}) characteristic for a certain secondary module (3, 3.1) (Aₓ, A_{y}) the controller (6) carries out a predefined routine.

10. Process in accordance with Claim 9, **characterized by the fact** that within the framework of the predefined routine the identity of the detected secondary module (3, 3.1) is stored in a memory (8).

11. Process in accordance with Claim 9 or 10, **characterized by the fact** that within the framework of the predefined routine the secondary module (3, 3.1), depending on its identity, is configured by or via the primary module (2).

12. Process in accordance with Claim 11, **characterized by the fact** that for configuration of the secondary module (3, 3.1) connected to the primary module (2), the controller (6) of the primary module (2) accesses the configuration data stored in a configuration data memory (7) of the same.

13. Process in accordance with Claim 11, **characterized by the fact** that for configuration of the connected secondary module, the controller accesses configuration data stored in an external configuration memory via an installation bus in building technology, or the primary module receives these configuration data via the installation bus as soon as the primary module has sent out a signal indicating that the secondary module connected to the primary module has been detected, which signal contains an identification of the detected secondary module.

## Revendications

1. Appareil d'installation pour un système d'installation électrique domotique, avec un module primaire (2) présentant un contrôleur (6) et avec un module secondaire (3, 3.1) raccordé à une interface matérielle (9) du module primaire (2), **caractérisé en ce que** le module primaire (2) est équipé d'un système d'identification du module secondaire, afin de détecter, parmi plusieurs modules secondaires (3, 3.1) possibles pouvant être raccordés à l'interface (9), le module secondaire (3 ou 3.1) actuellement raccordé, au moins un module secondaire (3, 3.1) pouvant être raccordé à l'interface (9) disposant d'au moins une boucle de contact de codage (11, 11.1) passive entrant en contact avec l'interface (9) du module primaire (2), et le codage du module secondaire (3, 3.1) étant établi par l'intermédiaire des contacts de raccordement (A₁, Aₓ ; A₁, A_{y}) du module primaire (2) utilisés par la boucle de contact (11, 11.1), des modules secondaires (3, 3.1) différents à boucle de contact (11, 11.1) se distinguant par une affectation différente des contacts de raccordement (A₁, Aₓ ; A₁, A_{y}) du module primaire (2) servant à cela.

2. Appareil d'installation selon la revendication 1, **caractérisé en ce que** des données de configuration nécessaires au fonctionnement des modules secondaires (3, 3.1) prévus pour être raccordés au module primaire (2) sont mémorisées dans celui-ci ou peuvent être accessibles à partir d'une mémoire externe par l'intermédiaire du module primaire (2).

3. Appareil d'installation selon la revendication 1 ou 2, **caractérisé en ce que** l'interface (9) reliant le module primaire (2) au module secondaire (3, 3.1) dispose d'un contact de raccordement (A₁) sous forme de contact de sortie pouvant être soumis à une tension d'essai, et d'au moins un contact de raccordement (Aₓ, A_{y}) caractéristique de chaque module secondaire (3, 3.1) prévu pour être raccordé, sous forme de contact de réception.

4. Appareil d'installation selon l'une des revendications 1 à 3, **caractérisé en ce que** le module secondaire présente de son côté la fonctionnalité d'un module primaire et est équipé d'une interface matérielle permettant d'y raccorder un autre module ayant la fonctionnalité d'un module secondaire.

5. Appareil d'installation selon la revendication 4, **caractérisé en ce que** le contrôleur du module primaire auquel est raccordé le module secondaire présentant les fonctionnalités d'un autre module primaire a également pour tâche de détecter l'autre module raccordé au module secondaire.

6. Appareil d'installation selon la revendication 4, **caractérisé en ce que** le module secondaire présentant les fonctionnalités d'un autre module primaire est équipé d'un contrôleur propre.

7. Appareil d'installation selon l'une des revendications 1 à 6, **caractérisé en ce que** le module primaire (2) présente une autre interface (4) par l'intermédiaire de laquelle le module primaire (2) peut être raccordé à un bus d'installation (5) technique domotique.

8. Appareil d'installation selon l'une des revendications 1 à 7, **caractérisé en ce que** le module primaire (2) est réalisé sous forme d'élément encastrée ou sous crépi d'un système de communication de porte et les modules secondaires (3, 3.1) pouvant être raccordés à celui-ci sont des écrans de conception diverse.

9. Procédé de détection d'un module secondaire (3, 3.1) raccordé à une interface matérielle (9) d'un module primaire (2), présentant un contrôleur (2), d'une installation électrique technique domotique, **caractérisé en ce que** au moins un contact de raccordement (A₁) de son interface (9) est soumis à une tension d'essai par le module primaire (2) et **en ce que** par suite un ou plusieurs autres contacts de raccordement (Aₓ, A_{y}) sont surveillés afin de détecter s'ils présentent une entrée de tension, au moins un contact de raccordement (Aₓ, A_{y}) différent étant soumis par chaque module secondaire (3, 3.1) prévu pour être raccordé au module primaire (2), par la sortie de tension vers la boucle passive de retour d'au moins une partie de la tension d'essai à l'interface (9) du module primaire (2) et, une entrée de tension ayant été constatée au niveau du ou des contact(s) de raccordement (Aₓ, A_{y}) caractéristique(s) d'un module secondaire (3, 3.1) précis, le contrôleur (6) procède à une routine prédéfinie.

10. Procédé selon la revendication 9, **caractérisé en ce que,** dans le cadre de la routine prédéfinie, l'identité du module secondaire (3, 3.1) détecté est déposée dans une mémoire (8).

11. Procédé selon la revendication 9 ou 10, **caractérisé en ce que,** dans le cadre de la routine prédéfinie, le module secondaire (3, 3.1) est configuré en fonction de son identité par le module primaire (2) ou par l'intermédiaire de ce dernier.

12. Procédé selon la revendication 11, **caractérisé en ce que,** pour la configuration du module secondaire (3, 3.1) raccordé au module primaire (2) par le contrôleur (6) du module primaire (2), il est fait appel à des données de configuration déposées dans la mémoire de configuration (7) de celui-ci.

13. Procédé selon la revendication 11, **caractérisé en ce que,** pour la configuration du module secondaire raccordé au module primaire par le contrôleur, il est fait appel par l'intermédiaire d'un bus d'installation technique domotique à des données de configuration déposées dans une mémoire de configuration externe ou que le module primaire reçoit ces données de configuration par l'intermédiaire du bus d'installation dès que le module primaire émet un signal indiquant que le module secondaire raccordé à celui-ci a été détecté, signal contenant une identification du module secondaire détecté.
